# EUROPEAN PATENT SPECIFICATION

(11) **EP 1 879 470 B1**
(45) Date of publication and mention of the grant of the patent: **04.11.2009**
(21) Application number: 06727964.6
(22) Date of filing: 19.04.2006
(51) Int. Cl.: A23L 1/22, A23L 1/30

(54) **FAT, WAX OR OIL-BASED FOOD INGREDIENT COMPRISING ENCAPSULATED FLAVORS**
NAHRUNGSMITTELBESTANDTEIL AUF FETT-, WACHS- ODER ÖLGRUNDLAGE ENTHALTEND VERKAPSELTE AROMEN
INGREDIENT ALIMENTAIRE A BASE DE MATIERE GRASSE, DE CIRE OU D'HUILE PRESENTANT DES AROMES ENCAPSULEES

(30) Priority: 04.05.2005 EP 05103732; 04.05.2005 US 677995 P
(43) Date of publication of application: 23.01.2008
(73) Proprietor: FIRMENICH SA, CH-1211 Geneva 8 (CH)
(72) Inventor: BARRA, Jérôme, F-74160 Neydens (FR); LE, Anh, Middletown, Delaware 19709 (US); MAUREL, Catherine, CH-1228 Plan-les-Ouates (CH); CHIAVERINI, Michael, Boulder, Colorado 80303 (US); GORDON, Jonathan F., South Kingstown, Rhode Island 02879-3151 (US); NORMAND, Valéry, F-74490 St-Jeoire-En-Faucigny (FR)
(74) Representative: Dale, Gavin Christopher
(86) International application number: PCT/IB2006/051203
(87) International publication number: WO 2006/117705

(56) References cited:
- EP-A- 1 454 534
- WO-A-2005/067733
- WO-A-2006/006003
- LYNE A: "Encapsulated flavourings - using the yeast cell" FOOD INGREDIENTS AND ANALYSIS INTERNATIONAL, LONDON, GB, vol. 24, no. 3, 2002, pages 8-9, XP009030880
- NELSON G ET AL: "Yeast delivery system" FOOD INGREDIENTS AND ANALYSIS INTERNATIONAL, LONDON, GB, September 1998 (1998-09), pages 13-14, XP009030829

## Description

### Technical Field

The present invention generally relates to the technical field of encapsulated flavors and to fat or oil-based food ingredients comprising encapsulated flavors. More particularly, the present invention relates to a food or food ingredient comprising lipids and flavor-capsules. The present invention further relates to food products comprising, as a coating or a filling, the food ingredient.

### Background of the Invention and Problem to be Solved

Flavor compounds include many small-sized, volatile and hydrophobic molecules, which tend to diappear from food products during the production, distribution or storage process by evaporation. Loss by evaporation of flavors can be reduced, for example, by using fats or oils as carriers for hydrophobic flavors, and, as a consequence, flavors are often applied to foods in the form of fat or oil-based coatings or fillings. However, flavors that are entrapped in a lipid matrix may not be released during consumption and are often swallowed together with fat droplets without interacting with the taste buds of the oral cavity. In this way, a substantial amount of flavor molecules is consumed without being perceived and the flavor profile of a food product comprising flavors dispersed in oil or fat may be poor despite high flavor load.

On the other hand, complex encapsulation systems are often employed in order to provide high concentrations of flavors in a storage-stable and easily applicable way. However, a drawback of encapsulation of flavors is that the timely release of all encapsulated flavors during chewing in the oral cavity is difficult to control. Possibly, encapsulated flavors are not released from their encapsulation matrix and do thus not add to the flavor profile of a food product during consumption, but are swallowed in encapsulated form. Alternatively, flavors may be released too early from the encapsulation matrix and subsequently be lost through evaporation.

The present invention addresses the problem of adding flavors to a food product in a way that flavors are not lost during manufacturing, distribution or storage of the food product. Importantly, loss of volatile flavors during manufacturing processes that involve above-ambient temperatures should be prevented. In addition, the present invention has the objective of providing flavors in a way such that the flavor perception and/or intensity during consumption is increased.

A more specific objective of the present invention is to provide flavors within a lipid base in a way that the flavors, during chewing, are immediately released and come into contact with the taste buds of the oral cavity and do not remain bound to oils or fats of the lipid base.

More particularly, an objective of the present invention is to provide flavor capsules that, when dispersed in a lipid base, for example an oil, are capable of retaining hydrophobic flavors within the capsules while preventing a release from the capsules into the lipid base.

A further objective of the present invention is to add flavors to a food product in a way that flavor intensity during consumption of the food product is increased compared to existing methods of adding flavors.

Another objective of the present invention is to stabilize flavors in food ingredients or foods having high quantities of fat or oil. In particular, evaporation of flavors needs to be prevented during the manufacture, storage or shelf life of this class of food products.

### Summary of the Invention

Remarkably, the inventors of the present invention found that if flavor-capsules based on a micro-organism, a matrix component and at least one flavor are mixed with a lipid and applied to a food product, for example by coating or filling of the food product with the lipid, even hydrophobic flavors are retained in the flavor-capsules and do not diffuse into the surrounding lipid environment. In this form, flavors remain encapsulated and evaporation of volatile flavors is prevented even if the lipid or the food product comprising the flavor-capsules is exposed to above-ambient temperatures, for example by heating, drying or baking.

Surprisingly, the stable encapsulation of flavors in a lipid base is interrupted as soon as the capsules come in contact with water. Upon contact with water, or the saliva of the oral cavity, and in presence of lipids, the flavors are immediately released from the flavor capsules. Food products or food ingredients comprising lipids and further comprising flavor-capsules based on a micro-organism, a matrix component and at least one flavor provide a remarkable flavor impact or overall flavor intensity upon consumption.

Accordingly, the present invention provides, in a first aspect, a food or food ingredient comprising a lipid phase and, dispersed in said lipid phase, flavor-capsules comprising a micro-organism having a cell wall, a matrix component and at least one encapsulated flavor.

In a further aspect, the present invention relates to a food product comprising a coating or a filling according to the present invention.

In a still further aspect, the present invention provides a method for applying a flavor to a food product, and/or a method for preparing a food product, the method comprising the step of coating and/or filling a food product with the food ingredient of the present invention.

### Detailed Description of the Preferred Embodiments

The present invention relates to a food or food ingredient comprising a lipid and, dispersed therein, flavor-capsules comprising a micro-organism, a matrix component and at least one encapsulated flavor compound.

Within the context of this specification the word "comprises" is taken to mean "includes, among other things". It is not intended to be construed as "consists only of".

Capsules comprising a micro-organism, a carbohydrate-component and at least one encapsulated flavor are disclosed in patent applications WO2005/067733A1 and WO2006/006003A1.

The term "flavor", in the context of the present invention, may refer to a single flavoring molecule, or to a composition comprising several flavoring agents. Preferably, the term flavor composition refers to a composition of at least two flavor compounds preferably having different logP values. More preferably, the composition comprises at least one flavor compound with logP > 2 and/or at least one flavor compound with logP ≤ 2.

The term logP refers to the octanol/water partition coefficient of a specific flavor compound to be encapsulated. For the purpose of the present invention, reference to a calculated logP (=clogP) value is made. This value is calculated by the software T. Suzuki, 1992, CHEMICALC 2, QCPE Program No 608, Department of Chemistry, Indiana University. See also T. J. Suzuki, Y. Kudo, J. Comput.-Aided Mol. Design (1990),4,155-198.

The term "flavor" thus means a compound, which is used alone or in combination with other compounds, to impart a desired gustative effect. To be considered as a flavor, it must be recognized by a skilled person in the art as being able to modify in a desired way the taste of a composition. Such compositions are intended for oral consumption and are hence often foods, nutritional compositions and the like.

The textbook "Perfume and Flavor Chemicals" Steffen Arctander, published by the author, 1969, is a collection of perfumes and flavors known to the skilled person and is expressly incorporated herein in its entirety by reference. The molecules of this textbook are suitable for being encapsulated in the capsules of the present invention.

The term flavor also includes compounds that are perceived by mediation of the trigeminal nerve, such as cooling, salivating, pungent and tingling compounds, for example.

The term "flavor-capsules" or "capsules", for the purpose of the present invention, refers to capsules based on a micro-organism, a matrix component and at least one encapsulated flavor.

According to an embodiment of the present invention, the capsules based on a micro-organism, a matrix component and at least one flavor are prepared by a process comprising the steps of
a) mixing yeast with water to obtain an aqueous mixture,
b) adding a flavor to the aqueous mixture,
c) stirring the aqueous mixture including the flavor until at least part of the flavor has passed into the micro-organism,
d) adding the matrix component to the aqueous mixture comprising the at least partly encapsulated flavor, and,
e) drying the resulting mixture to form flavor capsules, and
f) dispersing the flavor capsules evenly in the lipid phase of a food or food ingredient.

Steps a), b) and c) are familiar to the skilled person, for example from EP1454534A1, which discloses, in Example 1-6, the inclusion of flavorings into yeast cell bodies. Similarly, J. R P. Bishop et al. "Microencapsulation in yeast cells", J. Microencapsulation, 1998, vol. 15, no. 6, 761-773, disclose the encapsulation of high concentrations of essential oils into bakers yeast. Accordingly, an aqueous suspension of yeast and oil is mixed, which allows the oil to pass freely through the cell wall and membrane and to remain passively within the cell.

According to a preferred embodiment of the present invention, the micro-organism has an intact cell wall. Preferably, the micro-organism is a fungus or a bacterial micro-organism comprising a cell wall, more preferably it is a yeast cell. The cell wall of the micro-organism needs to be basically intact in order to effectively encapsulate and retain the flavors in the cells.

In addition, preferably, the endogenous intracellular components are still present in the micro-organisms. In other words, the micro-organisms have preferably not been treated with protease and/or acid and/or base (OH⁻) in order to elute or wash away intracellular components.

Preferably, the aqueous mixture comprising the micro-organism and water is a suspension of 10-30%, preferably 15-25 wt.-% solids, depending on type of organism and equipment used.

In the context of the present invention, percentages or parts are generally percentages or parts by weight of dry matter, unless otherwise indicated, for example by reference to aqueous solutions or percentages of solids, where the percentages refer to parts of the total solution, including water.

According to step b), at least one flavor is added to the aqueous mixture. Of course, the flavor could also be added earlier, for example, together with the yeast and the water. The flavor is usually present in a hydrophobic solvent, such as an essential oil or a flavor dissolved in an oil, and, therefore, the addition of the flavor may entail the formation of an emulsion. Accordingly, emulsifiers, surfactants and/or stabilizers may also be added to the aqueous liquid, for example. Preferably, the dry-weight ratio of micro-organism to flavor in the aqueous liquid is in the range of 1:1 to 5:1, preferably 1.4:1 to 4:1.

According to step c) the aqueous mixture comprising the micro-organism, water and the material to be encapsulated is then stirred for 1 to 6 hours, preferably. Stirring, in the context of the present invention also refers to actions like agitating or mixing. After completion of step c), substantial amounts of the material to be encapsulated have passed through the cell wall into the micro-organisms. Accordingly, in an embodiment, the encapsulated flavor is present within the cell wall of the micro-organism.

According to step d), the matrix component is added to the aqueous mixture. As is listed in WO2006/006003A1 a variety of possible matrix components may be used. Accordingly, carbohydrates, proteins and other, for example film-forming materials can be used for providing a suitable matrix. Preferably, the matrix component comprises a carbohydrate, more preferably, the matrix component comprises at least 50wt.%, more preferably at least 80wt.% of carbohydrates. Preferably, the carbohydrate includes di-, oligo- and/or polysaccharides. Preferably, the carbohydrate forming the matrix component is water soluble. The term "water soluble" means that the carbohydrate is at least 50% soluble according to the method described by L. Prosky et al., J. Assoc. Off. Anal. Chem. 71, 1017-1023 (1988).

Preferably, the matrix component comprises dextrin, more preferably maltodextrin and/or corn syrup. Most preferably, the matrix component comprises maltodextrin and/or com starch syrup having a mean dextrose equivalence of 6-25, preferably 11-22, most preferably 12-20. With DE > about 12 the maltodextrin is more suitable to also encapsulate hydrophilic flavors.

The matrix component may also comprise starches, starch derived carbohydrates, dietary fibre, for example, which are preferably water-soluble. For example, the matrix component may comprise capsul®, a modified starch commercially obtainable form National Starch -Food Innovation (New Jersey, USA).

Step e) of the process provides drying of the resulting mixture. Drying may be performed by spray drying, freeze drying, fluidized bed drying and/or oven drying, for example. Preferably, the drying step is performed by spray drying.

Following steps a) to e) given above, dried flavor capsules based on a micro-organism, a matrix component and at least one encapsulated flavor may be provided. Preferably, the capsules essentially consist of a micro-organism, a matrix, and at least one flavor, the latter being located within the micro-organism and optionally also in the matrix. The matrix component generally forms a film or a further layer around the micro-organism. Preferably, the matrix component is located on the outside surface of the cell wall of the micro-organism.

The flavor-capsules preferably comprise 8-25%, more preferably 12-24%, even more preferably 15-23%, and most preferably 18-22% by weight of encapsulated flavor.

The flavor capsules based on a micro-organism and a matrix component as obtained above have substantial advantages over the prior art. In particular, they are advantageous over capsules devoid of a matrix component in that they are suitable to encapsulate flavor compositions comprising different flavor molecules having different hydrophobicity and/or hydrophilicity. In this event, the matrix component is suitable to withhold more hydrophilic flavors, while hydrophobic flavors are encapsulated within the yeast cell's plasma membrane, in particular, within the phospholipid bilayer. In this way, the capsules are suitable to provide a more rounded flavor profile than capsules based on encapsulated yeast only, for example.

The food or food ingredient may be prepared by mixing the flavor capsules with the lipid, until even dispersion of the capsules in the lipid matrix (=lipid phase) is obtained. If solid at room temperature, the lipid may be heated before addition of the capsules in the lipids. Ingredients other than lipids and flavor capsules, such as those mentioned below, for example, may be added at any stage before, during or after the step of mixing the lipid with the capsules.

The food or food ingredient according to the present invention further comprises a lipid phase. The phase may comprise all kind of lipids, for example edible or food-grade fats, such as hydrogenated and non-hydrogenated fats, fatty acid esters, cacao butter and cacao butter replacers, oils and/or waxes, such as carnauba, hydrogenated castor oil, paraffin and the like, for example. The lipid may be solid at room temperature (RT=25°C), or it may be liquid at RT.

The food ingredient may consist of lipids and the flavor-capsules, however, it often comprises other components. Therefore, in an embodiment, the food or food ingredient of the present invention comprises at least 5% by weight of lipids. Preferably it comprises at least 10% by weight of lipids, more preferably at least 20% or 30%, and most preferably at least 40% by weight of lipids. For example, the food or food ingredient of the present invention may comprise more than 50% or more than 60% by weight of lipids.

The food or food ingredient may further comprise any kind of filler or food ingredient, if desired. For example, the food or food ingredient may comprise carbohydrates, proteins, oligo-peptides, amino acids, or other food-grade materials. For example, the food or food ingredient comprises modified carbohydrates, such as modified starches, fibres, and others, for example.

In an embodiment of the present invention, the food or food ingredient of the present invention further comprises sucrose, fructose, glucose, maltose, tagatose or other sweeteners. The term "other sweeteners" includes artificial sweetening agents, such as sucralose, acesulfame K, aspartame, sodium saccharine, sodium cyclamate, and polyols such as glycerol, maltitol, lactitol, sorbitol, xylitol, erythriol, for example.

Preferably, the food or food ingredient of the present invention comprises
- 5-99.99 wt.%, preferably 10-90.00 wt.% of a lipid,
- 0.01-20 wt.%, preferably 0.5-10 wt.% of flavor capsules, and, optionally,
- 0-80 wt.%, preferably 0.1-70 wt.% of further materials, with the exception of water.

While the food or food ingredient of the present invention is not limitative as regards the presence of any possible filling or other food-grade material, it preferably contains small or no amounts of water. Surprisingly, the benefits of encapsulation, temperature-protection and release of the flavors in the food ingredient are related to the fact that there is little or no interaction of the flavor-capsules with water. In the presence of lipids and water, the cell wall of the capsules changes its structure and encapsulated flavors tend to be released quickly. The release of flavor is observed once the cell wall of the yeast in the capsules contains about 7-13wt.% of water and gets in further contact with lipids. The concept of the present invention thus provides that the flavor is only released once the food or food ingredient is exposed to saliva in the oral cavity.

Therefore, in an embodiment, the food or food ingredient of the present invention comprise less than 20% by weight of water. Preferably, it comprises less than 15%, more preferably less than 8%, even more preferably less than 7% and most preferably less than 5% of water. Most preferably, the food ingredient of the present invention is substantially free of water.

The preferably low water content of the food or food ingredient of the invention may also be expressed in terms of the water activity of the food or food ingredient (Aw). Preferably, the food or food ingredient of the present invention has a water activity Aw of less than 0.7, preferably less than 0.5, more preferably less than 0.3, most preferably below 0.2. Water activity is preferably measured with an Aqualab CX-2 apparatus (Decagon Devices, Inc., Pullman, Washington, USA, or, alternatively with a Novasina apparatus, type Aw Sprint RS50, obtainable in Switzerland). The apparatus is to be used according to the user's manual. In particular the thermostatic water bath connected to the apparatus is adjusted to 20°C. Start the procedure once the sample has been made thermostatic in the chamber foreseen for this. At the end of the procedure, check that temperature still is at 20 ±0.5 °C.

While the food or food ingredient of the present invention has only little water as defined above, it may be used as a component in a more complex food product, which in turn contains more water, with the water being physically separated from the capsules in the food ingredient of the present invention. For example, one can envisage food products, which contain oil-in water emulsions with the food ingredient of the invention being the oily phase having the capsules dispersed in it, and thus protected from the aqueous part of the emulsion.

For example, the food- or food ingredient, however, may be a product, which is manufactured to be stored in a dry form, but reconstituted with an aqueous liquid (water, milk, juice, for example) shortly before consumption. Shortly before consumption means about 1-5 hours or 0.1-59 minutes before consumption. Upon reconstitution, the flavors may be released from the capsules but are still available to the consumer because loss of flavors will be small in the short time until consumption. Examples of such products are powdered products, such as powdered soups, sauces, breakfast drinks, as mentioned below in more detail.

With regard to the preferably low water content of the food or food ingredient of the present invention, the optional food grade materials (proteins, carbohydrates), which are other than lipids and flavored capsules, are preferably selected from those that do not attract and/or accumulate water from the ambient air, or, if they do, other materials having water accumulating capacity are preferably present in low amounts.

An advantage of the flavor capsules in the food or food ingredient of the present invention are the efficient protection of flavor loss by evaporation or degradation in the presence of above-ambient temperatures. Surprisingly, generally volatile flavors remain encapsulated within the capsules based on a micro-organism and a matrix component even if the capsules are exposed to elevated temperatures up to 280°C.

Therefore, in an embodiment of the present invention, the food or food ingredient is **characterized in that** it is subjected to a temperature of >20°C during the manufacturing process. In another embodiment, the food or food ingredient is subjected to a temperature of >80°C during the manufacturing process. Preferably, the food or food ingredient is subjected to temperatures of at least 30, 40, 50, 60, 70, 80, 90, 100, 120, 140, 180, 200, 220, 250, or 270°C during the manufacturing process.

The ambient temperatures defined above may be applied with any means used in food manufacturing.

For example, the food ingredient may be heated to 30 to 80°C in order to facilitate dispersion of the flavor capsules within the lipids of the food ingredient. This procedure is particularly preferred if the lipid is a fat that is solid at room temperature, and heating will result in liquefying the fat, allowing easy mixing of the flavor capsules with the fat.

Additionally, if the food ingredient of the present invention is combined with other food materials to prepare a final food product, the food ingredient comprising lipids and flavor capsules of the present invention may have to be heated in order to add it to the final food product. This is particularly the case with coating processes, where the coating material is heated or melted in order to apply it onto a food product. During a subsequent cooling step, the coating may solidify or congeal on the surface of the food product, for example.

Furthermore, a food consumer end product comprising the food ingredient of the present invention may have to be heated after having been combined with the food ingredient, for example for the purpose of increasing palatability or for reducing germ load of the food product. The elevated temperature may thus include processes like melting, cooking, drying, frying, baking, toasting, pasteurizing, sterilizing, for example. These procedures are known to the skilled person and do not have to specified in more detail here. It is a particular advantage of the present invention that conventional food processing methods do not have to be modified due to the presence of the food ingredient of the present invention.

In an embodiment, the food of the present invention is a confectionery, a spread, a fat filling, a fat coating, a spray coating, a wax coating, a chocolate coating, a spicing agent, a powdered nutritional composition, a shortening, a margarine, and/or a bakery dry-mix.

In another embodiment, the present invention relates to a food ingredient, which is a coating, filling, or the oily phase of an emulsion in food products. The food ingredient of the present invention has lipids as an essential component and is, therefore, particularly suitable as a filling or coating of any kind of food product.

Accordingly, in an aspect, the present invention relates to a food product comprising, as a coating or filling, the food ingredient of the present invention.

Clearly, the above-mentioned advantages in terms of temperature resistance of the food or food ingredient of the present invention do also apply for food products comprising, as a coating or a filling, the food ingredient of the present invention. Accordingly, according to embodiments, the present invention also provides food products comprising the food ingredient of the present invention as a coating or filling which are subjected to a temperature of >25°C or above 100°C during the manufacturing process, respectively, or to the temperatures disclosed before for the food ingredient.

In an embodiment, the food product is a filled food product selected from the group consisting of a pie, a cake, a snack, a fat-filled pretzel or cracker, a fat filled biscuit, and/or an éclair type product.

In another embodiment, the food product is a coated food product selected from sweetened products, such as pastry, cakes, pies, candies, hard-boiled candies, chewing gums (including pellets and sticks), gummi bears, jelly bellies, compressed tablets, for example. Accordingly, these or other food products comprise as a coating the food ingredient of the present invention.

The coated food product may also be a savory food, such as a pizza, a cracker, a snack, a cracker, a bread, potato chips, extruded or puffed snacks, snack noodles, for example.

The coating or filling of the food products with the food ingredient of the present invention may be performed with conventional coating or filling technologies. Coating or filling equipment generally used for coating with lipids like oil or fat may be used.

Examples for coating equipment suitable for applying lipid coatings also comprising the flavor capsules of the present invention are spraying equipments, coating pans (Brucks®, Bruccoma L/GII, Germany), coating guns (Binks® 95G Gravity Speed Spray Gun), fluid bed equipments (Niro Aeromatic, Switzerland), for example.

Examples for filling equipments suitable for applying fillings to food products are extruders, such as screw-extruders, pistons, APV Baker's (Petersborough, PE4 7AP, UK), forming extruders (Hosokawa Bepex GmBH, 74211 Leingarten, Germany), for example.

The invention will now be illustrated by way of the following examples but is not limited to these example.

### Examples

### Example 1

### Preparation of Capsules based on Yeast, Maltodextrin and Encapsulated Flavors

100 g spray-dried yeast (Aventine Renewable Energy Company, USA) were dispersed in 375 g water. 75g of flavor (NovaMint FreshMint®, commercially obtainable from Firmenich SA, Switzerland, commercial no. 506038T) are added and the mixture is maintained for 4 hours at 50°C under constant agitation at 150 rpm in a blade stirrer. Thereafter, 150 g of maltodextrin (DE 18) was added and mixed until the total aqueous mixture was homogenous.

The mixture was then spray dried on a Niro mobile minor® at 210°C inlet and 90°C outlet temperature at a feed rate of 10 ml/minute. A powder of capsules based on a micro-organism, a matrix component and at least one flavor are obtained. At the end of the process, the flavor capsules comprised 40wt.% yeast, 40wt.% maltodextrin and 20wt.% liquid flavor.

The same procedure is repeated two times with a liquid butter and a liquid pizza flavor, respectively, instead of the mint flavor. Accordingly, 75 g of butter or pizza flavor (commercial nos: 334550 01NF and 700543 02T, respectively), commercially obtainable from Firmenich, Switzerland, were used in the same procedure as outlined above, to obtain butter flavor and pizza flavor encapsulated in capsules based on a micro-organism and a matrix component. The spray-dried butter- or pizza flavored capsules comprised 40wt.% yeast, 40wt.% maltodextrin and 20wt.% of the liquid flavor, hence five times less flavor compared to the pure liquid flavor.

### Example 2

### Preparation of Fat Fillings Comprising Encapsulated and Non-Encapsulated Flavors

A fat base that can be used as a filling or a coating of food products is prepared by mixing in a Hobart® mixer (model N-50, Canada) at ambient temperature 100g of confectionery T) sugar with 100 g of vegetable coco-fat (Astra cocofat, Unilever, Switzerland).

Two series of flavored fat fillings were prepared, both of which comprised pure liquid flavor and encapsulated flavor obtained in Example 1 above, at the weight percentages indicated below:

### Series 1

| | | |
|---|---|---|
| Sample 1: | Liquid NovaMint FreshMint® flavor (see Example 1): | 0.05wt.% |
| Sample 2: | Flavor-capsules obtained in Example 1: | 0.25wt.% |

The two fat fillings of the first series thus contained iso-load of mint flavor.

### Series 2

| | | |
|---|---|---|
| Sample 3: | Liquid NovaMint FreshMint® flavor (see Example 1): | 0.05wt.% |
| Sample 4: | Flavor-capsules obtained in Example 1: | 0.10wt.% |

Fat filling no. 4 of the second series differs in that the filling comprising the flavor-capsules (Sample 4) actually contains 3 times less flavor than any of the preceding fillings (Samples 1 - 3), given the composition of the capsules (see Example 1).

### Sensory Evaluation of Flavored Fat Fillings

The fat fillings of each of the two series obtained in Example 2 were blind tested by 20 trained panelists in one testing session. The test design provided an intensity rating and a paired t-test for statistical evaluation.

Accordingly, all panelists have tasted one small spoon of fat filling following one of the two possible presentation orders, which were presented an equal number of times (10 panelists started with Sample 1 and 10 panelists tasted Sample 2 first). Subjects were asked to identify the sample for which the mint flavor was more intense. For one sample of the pair, subjects were also asked to rate the mint intensity on a scale ranging from 1 to 10 (0 = no mint flavor, 10 = strong mint flavor). Subjects were also invited to describe product differences.

### Results Series 1:

Four (4) subjects selected sample 1 (liquid flavor) as being the most intense and 16 subjects found sample 2 (comprising flavor capsules) as being the most intense. Therefore, fat fillings flavored with capsules comprising yeast, a matrix component and at least one flavor have significantly (p=0.0111) stronger flavor intensity than fat fillings comprising the same amount of flavor in a non-encapsulated, liquid form.

### Results Series 2:

Ten subjects selected sample 1 (liquid flavor) as being the most intense and 10 subjects found sample 2 (comprising flavor capsules), which contained 60wt.% less flavor than sample 1, as being the most intense. Therefore, fat fillings flavored with capsules comprising yeast, a matrix component and at least one flavor have the same intensity as fat fillings containing more liquid, non-encapsulated flavor.

The observed fact that flavor encapsulated in yeast and a matrix component are perceived more intensely than flavors that are not so encapsulated flavors is concluded to be related to the better release of the encapsulated flavor in the oral cavity during consumption. While flavors dispersed in the lipid matrix may remain bound to the matrix, the encapsulated flavors, when coming into contact with the saliva and the surrounding lipids, are disrupted and the flavors come easily into contact with the taste buds.

### Example 3

### Coated Crackers

The purpose of this example is to manufacture baked goods coated with an oil dispersion of liquid and encapsulated flavors, both having the same flavor loads.

Two series of flavor dispersions in vegetable oil containing similar amounts of active flavor ingredients were produced according to the procedures below.

### First Series: Oil Dispersion Comprising Liquid and Encapsulated Butter Flavor

1. 1.0 g of encapsulated butter flavor (see Example 1) were added to 99 g of liquid Canola Oil, heated to 65.5°C, and stirred well.
2. 0.2 g of liquid butter flavor was added to 99.8 g of liquid Canola Oil, heated to 65.5°C and stirred well.

This resulted in two 100-gram quantities of butter flavor / oil mixtures, each of which contained 0.2 g of butter flavor.

### Second Series: Oil Dispersion Comprising Liquid and Encapsulated Pizza Flavor

According to the same procedure and with the same quantities as in Series 1 above, pizza flavor (see Example 1) was added to Neobee® oil to obtain two 100-gram quantities of pizza flavored oil mixtures, each of which contained 0.2 g of pizza flavor.

The flavor in oil dispersions were then applied to the surfaces of store-bought crackers using a hand-pump trigger sprayer at the rate of 10 grams of flavor dispersion per 100 grams of crackers. This resulted in 0.02% butter or pizza flavor being added to the crackers. The crackers used were Manischewitz Matzo® crackers miniatures, unsalted. They were preferred because they contain no added flavors or fat or oil, and consist of essentially unbleached wheat flour and water, making them ideal for the evaluation of flavors.

After the addition of the oil/flavor dispersion, the crackers were heated in a continuous oven for 10 minutes at 220°F (104.4°C) in order to facilitate absorption of the oil into the cracker. Oil is typically applied to crackers and other baked goods to enhance, appearance, taste, and mouth feel properties, as well as to help particles such as salt or seasonings adhere to the baked good surface. Heat, either applied separately, or residually present from the baking process, facilitates the absorption of the oil by the cracker.

The crackers were allowed to cool to room temperature and then packaged to protect the texture.

### Sensory Evaluation of Flavored Crackers

The crackers obtained above were tested by three trained panelists in a blind taste test. Each subject was asked to assess butter or pizza flavor intensity of subsequently tasted pairs of butter and pizza flavored crackers.

The crackers with the encapsulated flavor were considered to be much stronger in terms of butter and pizza flavor intensities compared to the crackers flavored with liquid flavors. The crackers flavored with the encapsulated flavors had stronger flavor impact and longer lasting flavor compared to the crackers flavored with the un-encapsulated flavor, when the flavors were applied at similar dosages. These improvements are attributed to the heat stable nature of the yeast-encapsulated flavor.

### Example 4

### Preparation of Mint-Flavored Milk Chocolate

A flavored milk chocolate is prepared according to the following protocol:
- In a Pyrex® glass beaker (1000 ml), place in the milk chocolate (Carma, Milk Chocolate, Dübendorf, Switzerland) and melt it in a microwave to the temperature, 46-48°C.
- Cool the milk chocolate to 27-29°C
- Reheat the milk chocolate to 30-32°C
- Add flavor and mix it well
- Pour into an empty mold
- Wait until the chocolate sets hard and gently remove from the mold at room temperature

The flavors that were used are:
Sample 1: liquid mint flavor (Example 1) at 0.06 wt.% of milk chocolate
Sample 2: mint flavored capsules (Example 1) at 0.30 wt.% of milk chocolate

### Sensory Evaluation of Mint-Flavored Milk Chocolate

The same protocol as described for Example 2 was used, with the difference that 10 panelists tasted 2 g units of liquid-flavored (sample 1) versus capsule-flavored chocolate (sample 2).

Sample 1 was perceived as having good mint flavor impact initially which gradually decreased during eating.

Sample 2 provided a lower mint flavor impact initially, which gradually increased until its overall mint intensity was higher than Sample 1.

### Example 5

### Preparation of a Mint-flavored Milk Chocolate Crispy Cake

A cake having a chocolate coating was prepared according the following procedure:
- In a Pyrex® glass beaker (1000 ml), place in 100 g of milk chocolate (Carma, Milk Chocolate, Dübendorf, Switzerland) and melt it in a microwave to the temperature, 46-48C
- Cool the milk chocolate to 27-29C
- Reheat the milk chocolate to 30-32C
- Add flavor and mix well
- Weigh 15 grams of milk chocolate with flavor and spread it evenly on top of the unflavored rice crispy cake
- Wait until the milk chocolate sets hard on top of the unflavored rice crispy cake at room temperature

The flavors that were used are:
Sample 1: liquid mint flavor (Example 1) at 0.08 wt.% of milk chocolate
Sample 2: mint flavored capsules (Example 1) at 0.40 wt.% of milk chocolate

### Sensory Evaluation of Mint-flavored Milk Chocolate Crispy Cake

The same protocol as described in Examples 2 and 4 was conducted, with the difference that 5 panelists participated in one tasting session and that the sample size was 3 g of coated cake.

The results of the sensory evaluation were as for the flavored milk chocolate (Example 6) alone: Sample 2, comprising encapsulated flavors, had a lower initial impact but over the entire time of tasting a overall stronger mint flavor intensity than Sample 1, which contained liquid, non-encapsulated flavor.

### Conclusions of Examples 1 - 5

The above experiments show that foods or food ingredients, such as fillings or coatings, which contain lipids can advantageously be flavored with flavor capsules based on a micro-organism, a matrix component and at least one encapsulated flavor. In oil or fat based foods or food ingredients, which are substantially free of water, flavors can effectively be encapsulated and flavor diffusion into the lipid matrix is prevented. Upon consumption, probably due to the contact with saliva (water) in the oral cavity, the flavors are immediately released from these capsules and enhanced flavor intensity is perceived by the consumer.

## Claims

1. A food or food ingredient comprising a lipid phase and, dispersed in said lipid phase, flavor-capsules comprising a micro-organism having a cell wall, a matrix component and at least one encapsulated flavor.

2. The food or food ingredient according to claim 1, which is a coating or filling for food products.

3. The food or food ingredient according to either claim 1 or claim 2, comprising less than 20% by weight of water.

4. The food or food ingredient according to any one of the preceding claims, which comprises at least 5% by weight of lipids.

5. The food or food ingredient according to any one of the preceding claims, in which the encapsulated flavor is present within the cell wall of the micro-organism.

6. The food or food ingredient according to any one of the preceding claims, in which the matrix component is located on the outside surface of the cell wall of the micro-organism.

7. The food ingredient according to any one of the preceding claims, in which the micro-organism has an intact cell wall.

8. The food or food ingredient according to any one of the preceding claims, which is selected from the group consisting of a confectionery, a spread, a fat filling, a fat coating, a spray coating, a wax coating, a chocolate coating, a spicing agent, a powdered nutritional composition, a shortening, a margarine, and/or a bakery dry-mix.

9. A method preparing the food or food ingredient according to any one of the preceding claims comprising the steps of:
a) mixing a micro-organism with water to obtain an aqueous mixture,
b) adding at least one flavor to the aqueous mixture,
c) stirring the aqueous mixture including the flavor until at least part of the flavor has passed into the micro-organism,
d) adding the matrix component to the aqueous mixture comprising the at least partly encapsulated flavor,
e) drying the resulting mixture to form flavor capsules, and
f) dispersing the flavor capsules evenly in the lipid phase of a food or food ingredient.

10. The process according to claim 9, in which the mixture is subjected to a temperature of >80°C during the manufacturing process.

## Patentansprüche

1. Nahrungsmittel oder Nahrungsmittelbestandteil, umfassend eine Lipidphase und, dispergiert in der Lipidphase, Aromakapseln, umfassend einen Mikroorganismus mit einer Zellwand, eine Matrixkomponente und mindestens ein eingekapseltes Aroma.

2. Nahrungsmittel oder Nahrungsmittelbestandteil gemäß Anspruch 1, welche eine Beschichtung oder Füllung für Nahrungsmittelprodukte sind.

3. Nahrungsmittel oder Nahrungsmittelbestandteil gemäß entweder Anspruch 1 oder Anspruch 2, umfassend weniger als 20 Gew.-% Wasser.

4. Nahrungsmittel oder Nahrungsmittelbestandteil gemäß einem der vorhergehenden Ansprüche, welche mindestens 5 Gew.-% Lipide umfassen.

5. Nahrungsmittel oder Nahrungsmittelbestandteil gemäß einem der vorhergehenden Ansprüche, in welchen das eingekapselte Aroma innerhalb der Zellwand des Mikroorganismus vorhanden ist.

6. Nahrungsmittel oder Nahrungsmittelbestandteil gemäß einem der vorhergehenden Ansprüche, in welchen sich die Matrixkomponente auf der äußeren Oberfläche der Zellwand des Mikroorganismus befindet.

7. Nahrungsmittelbestandteil gemäß einem der vorhergehenden Ansprüche, in welchem der Mikroorganismus eine intakte Zellwand hat.

8. Nahrungsmittel oder Nahrungsmittelbestandteil gemäß einem der vorhergehenden Ansprüche, welche aus der Gruppe, bestehend aus einer Süßware, einem Aufstrich, einer Fettfüllung, einer Fettbeschichtung, einer Sprühbeschichtung, einer Wachsbeschichtung, einer Schokoladenbeschichtung, einem Würzmittel, einer gepulverten Nährstoffzusammensetzung, einem Shortening, einer Margarine und/oder einer Backtrockenmischung, ausgewählt sind.

9. Verfahren zum Herstellen eines Nahrungsmittels oder Nahrungsmittelbestandteils gemäß einem der vorhergehenden Ansprüche, umfassend die Schritte:
a) Mischen eines Mikroorganismus mit Wasser, um ein wässeriges Gemisch zu erhalten,
b) Hinzufügen von mindestens einem Aroma zu dem wässerigen Gemisch,
c) Rühren des wässerigen Gemischs einschließlich des Aromas, bis zumindest ein Teil des Aromas in den Mikroorganismus übergegangen ist,
d) Hinzufügen der Matrixkomponente zu dem wässerigen Gemisch, umfassend das zumindest teilweise eingekapselte Aroma,
e) Trocknen des resultierenden Gemischs, um Aromakapseln zu erzeugen, und
f) Dispergieren der Aromakapseln gleichmäßig in der Lipidphase eines Nahrungsmittels oder Nahrungsmittelbestandteils.

10. Verfahren gemäß Anspruch 9, in welchem das Gemisch während des Herstellungsverfahrens einer Temperatur von >80°C unterworfen wird.

## Revendications

1. Aliment ou ingrédient alimentaire comprenant une phase lipidique et, dispersées dans ladite phase lipidique, des capsules d'arôme comprenant un micro-organisme ayant une paroi cellulaire, un composant de matrice et au moins un arôme encapsulé.

2. Aliment ou ingrédient alimentaire selon la revendication 1, qui est un enrobage ou une garniture pour produits alimentaires.

3. Aliment ou ingrédient alimentaire selon la revendication 1 ou la revendication 2, comprenant moins de 20% en poids d'eau.

4. Aliment ou ingrédient alimentaire selon l'une quelconque des revendications précédentes, qui comprend au moins 5% en poids de lipides.

5. Aliment ou ingrédient alimentaire selon l'une quelconque des revendications précédentes, dans lequel l'arôme encapsulé est présent à l'intérieur de la paroi cellulaire du micro-organisme.

6. Aliment ou ingrédient alimentaire selon l'une quelconque des revendications précédentes, dans lequel le composant de matrice est situé sur la surface extérieure de la paroi cellulaire du micro-organisme.

7. Ingrédient alimentaire selon l'une quelconque des revendications précédentes, dans lequel le micro-organisme a une paroi cellulaire intacte.

8. Aliment ou ingrédient alimentaire selon l'une quelconque des revendications précédentes, qui est choisi dans le groupe constitué d'une confiserie, d'un produit à tartiner, d'une garniture grasse, d'un enrobage gras, d'un enrobage par pulvérisation, d'un enrobage cireux, d'un enrobage de chocolat, d'un agent d'aromatisation, d'une composition nutritionnelle en poudre, d'une matière grasse, d'une margarine, et/ou d'une préparation sèche de boulangerie.

9. Procédé de préparation de l'aliment ou de l'ingrédient alimentaire selon l'une quelconque des revendications précédentes comprenant les étapes consistant à:
a) mélanger un micro-organisme avec de l'eau pour obtenir un mélange aqueux,
b) ajouter au moins un arôme au mélange aqueux,
c) agiter le mélange aqueux incluant l'arôme jusqu'à ce qu'au moins une partie de l'arôme soit passée dans le micro-organisme,
d) ajouter le composant de matrice au mélange aqueux comprenant l'arôme au moins partiellement encapsulé,
e) sécher le mélange résultant pour former des capsules d'arôme, et
f) disperser les capsules d'arôme uniformément dans la phase lipidique d'un aliment ou ingrédient alimentaire.

10. Procédé selon la revendication 9, dans lequel le mélange est soumis à une température >80°C pendant le procédé de fabrication.
